# EUROPEAN PATENT APPLICATION

(11) **EP 2 550 861 A1**
(43) Date of publication of application: **30.01.2013**
(21) Application number: 11182483.5
(22) Date of filing: 23.09.2011
(51) Int. Cl.: A01K 27/00, F16B 45/04

(54) **Snap hook for animal leash**

(30) Priority: 29.07.2011 JP 2011167611
(71) Applicant: Ralloc Co. Ltd., Mino-shi, Osaka 562-0031 (JP)
(72) Inventor: Tozawa, Satoshi, Mino-shi, Osaka 562-0031 (JP)
(74) Representative: Thorniley, Peter

(57) **Abstract**

A snap hook (200) for an animal leash is configured to include a main body (7) including a base (3), a hook portion (4) extending from the base, the hook portion having an end (4a) and a connection part (14) for contacting an object (13) to which the snap hook is joined, a sleeve portion (50) having an end (5a) and being provided with a slit (8a)formed along a direction of the length of the sleeve portion, the sleeve portion extending from the base such that the end being opposed to the end of the hook portion, thereby defining an opening (6) therebetween for accepting the object, and a restraining plate (10) extending from the base and between the hook portion and the sleeve portion toward the connection part, thereby defining a window (15) which communicates with the opening; a ring (1) rotatably connected to the base; a slide bar (110), provided with a knob (90), being encased in the sleeve portion such that an end (11a) of the slide bar is opposed to the end of the hook portion and that a ridge (91), formed on an outer surface of the knob, extrudes through the slit; and a spring (12) for biasing the slide bar toward the end of the hook portion, thereby closing the opening, wherein the restraining plate (10) restricts the movement of the object (13) within the window (15), thereby preventing the object from approaching the base (3).

## Description

The present disclosure relates to subject matter contained in priority Japanese Patent Application No. 2011-167611 filed on July 29, 2011, the contents of which is herein expressly incorporated by reference in its entirety.

### BACKGROUND OF THE INVENTION

### 1. Field of the Invention

The present invention relates to a snap hook for an animal leash, and more particularly relates to a snap hook attached to a connection ring provided on a collar or a cloth of an animal to be led or held.

### 2. Description of the Related Art

Various types of snap hooks are known and used to hold an object such as animals or handbags. Such snap hooks include a hook portion for accepting the object. For use in holding an animal, an animal leash is connected to a snap hook, and a hook portion of the snap hook is attached to a connection ring such as D-ring provided on a collar or a cloth of an animal to be led or held.

A typical snap hook for this use is proposed in, for example, Japanese Patent Laid-Open Publication No. 2006-141205 (hereinafter Patent Document 1, see FIG. 9). The snap hook includes a sleeve portion, a hook portion extending from the sleeve portion, and a slidable bolt encased in the sleeve portion together with a spring. The sleeve portion is provided with a slit formed along the direction of the length of the sleeve portion. The slidable bolt has a knob, and is encased in the sleeve portion where the knob is exposed through the slit. An end of the hook portion is opposed to an end of the slidable bolt so as to form an opening between the ends. The opening allows for the ingress and egress of the object such as D-ring, and is generally closed by biasing the slidable bolt toward the end of the hook portion by use of the spring. The slidable bolt can be slid rearward to form the opening, by operating the knob of the slidable bolt.

Snap hooks of this nature may experience an unexpected detachment of the D-ring from the snap hook caused by unexpected action of an animal, such as when frightened or attracted by something while the animal is led or held, as taught by Patent Document 1. Such an unexpected detachment results from an entanglement between the snap hook and the D-ring, caused by unexpected action of an animal. Under such a condition, the D-ring may touch and push back the knob of the slidable bolt, resulting in opening of the slidable bolt. Patent Document 1 aims at preventing this kind of detachment of the D-ring from the snap hook. Patent Document 1 discloses providing a linkage ring between the snap hook and the D-ring to allow for free movement of the snap hook. The provision of the linkage ring aims at reducing the likelihood of the entanglement between the snap hook and the D-ring. For the sake of this, the linkage ring is provided to simply connect the snap hook and the D-ring, in order to suppress a twist between the snap hook and the D-ring, which may cause the entanglement.

Another snap hook aimed at preventing this kind of detachment is proposed in Japanese Patent Laid-Open Publication No. 2009-72080 (hereinafter Patent Document 2). The configuration of this snap hook is similar to that disclosed in Patent Document 1, except in that the sleeve portion is provided with another slit for locking the knob of the slidable bolt (hereinafter "locking slit".) The locking slit is parallel with the slit in the sleeve portion, and braches off from the slit at a position where the slidable bolt is pushed back halfway. To close the opening of the snap hook, the knob of the slidable bolt is led from the slit to the locking slit with the rotation of the slidable bolt. The knob is then moved along the locking slit to a closing position where the slidable bolt makes contact with the end of the hook portion. With this configuration, even if the knob is unexpectedly pushed back from the closing position, the knob will stop at the position where the slidable bolt is pushed back halfway. The likelihood of the unexpected detachment of the D-ring from the snap hook is thereby reduced.

The snap hook disclosed in Patent Document 1 has a configuration in which the linkage ring is provided to simply connect the snap hook and the D-ring. However, the linkage ring is not sufficient to suppress the twist enough to prevent the entanglement between the snap hook and the D-ring. Consequently, it cannot be assured that the snap hook disclosed in Patent Document 1 is free from unexpected opening of the snap hook.

Also, in the snap hook disclosed in Patent Document 2, the knob, which rests at the position where the slidable bolt is pushed back halfway, may be pushed by the D-ring which is caused to move by unexpected action of an animal. The knob may be led from the locking slit to the slit, and may further be pushed back to a position where the slidable bolt is pushed back completely to form the opening. Consequently, it cannot be assured that the snap hook disclosed in Patent Document 2 is free from unexpected opening of the snap hook.

### SUMMARY OF THE INVENTION

In light of the problems encountered by the conventional techniques, it is an object of the present invention to provide a snap hook for an animal leash which prevents a force for pushing back, applied by the object such as a D-ring, from being exerted on the exposed knob, by restricting a range of movement of the object.

In order to achieve the above object, a snap hook according to the present invention includes a main body including a base, a hook portion extending from the base, the hook portion having an end and a connection part for contacting an object to which the snap hook is joined, a sleeve portion having an end and being provided with a slit formed along a direction of the length of the sleeve portion, the sleeve portion extending from the base such that the end being opposed to the end of the hook portion, thereby defining an opening therebetween for accepting the object, and a restraining plate extending from the base and between the hook portion and the sleeve portion toward the connection part, thereby defining a window which communicates with the opening; a ring rotatably connected to the base; a slide bar, provided with a knob, being encased in the sleeve portion such that an end of the slide bar is opposed to the end of the hook portion and that a ridge, formed on an outer surface of the knob, extrudes through the slit; and a spring for biasing the slide bar toward the end of the hook portion, thereby closing the opening, wherein the restraining plate restricts the movement of the object within the window, thereby preventing the object from approaching the base.

The above and other objects and features of the present invention will become apparent from the following description of preferred embodiments given in conjunction with the accompanying drawings.

### BRIEF DESCRIPTION OF THE DRAWINGS

FIG. 1 is a cutaway front view of a snap hook for an animal leash according to a first embodiment of the present invention;
FIG. 2 is a sectional view taken along the line II-II in FIG. 1;
FIG. 3 is a sectional view taken along the line III-III in FIG. 1;
FIG. 4 is a side view seen in the direction of arrow IV in FIG. 1;
FIG. 5 is a side view seen in the direction of arrow V in FIG. 1;
FIG. 6 is a side view of a slide bar of the snap hook shown in FIG. 1;
FIG. 7 is a front view of a snap hook for an animal leash according to a second embodiment of the present invention;
FIG. 8 is a sectional view taken along the line VIII-VIII in FIG. 7;
FIG. 9 is a side view seen in the direction of arrow IX in FIG. 7;
FIG. 10 is a side view of a slide bar of the snap hook shown in FIG. 7;
FIG. 11 is a perspective view of the snap hook shown in FIG. 7, connected to an object; and
FIG. 12 is a view showing a knob of the snap hook shown in FIG. 7, contacting the object.

### DETAILED DESCRIPTION OF THE PREFERRED EMBODIMENTS

Prior to describing the preferred embodiments of the present invention in detail, the technical feature of the invention will be briefly discussed.

The present invention aims at preventing unexpected detachment of a snap hook from an object to which the snap hook is joined, by regulating the position of the object with respect to a knob of the snap hook. The regulation of the position of the object is conducted by restricting a range of movement of the object inside a hook portion of the snap hook.

For the sake of this, the snap hook according to the present invention includes a restraining plate which defines a range of movement of the object. The restraining plate lies inside the snap hook while avoiding a connection part of the hook portion. Thereby, the movement of the object is restricted within a range adjacent to the connection part of the hook portion.

### (First Embodiment)

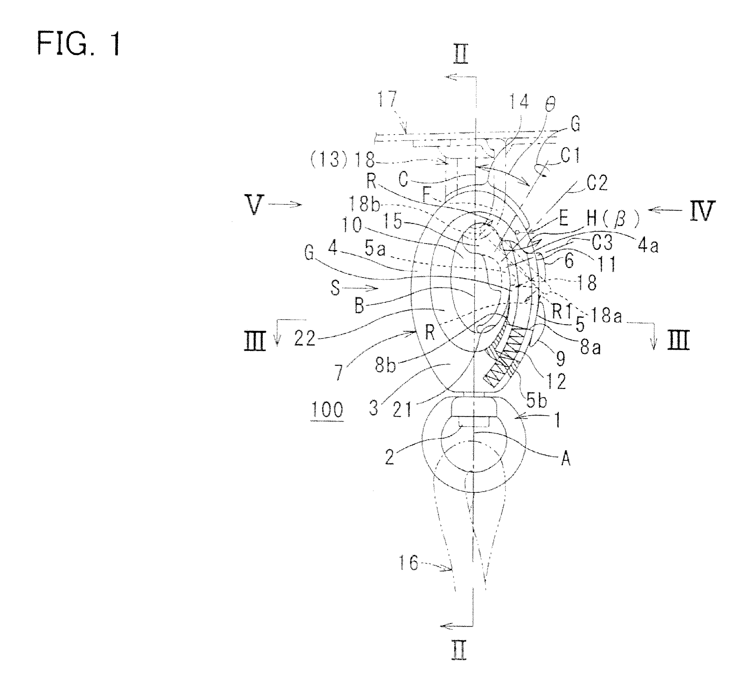

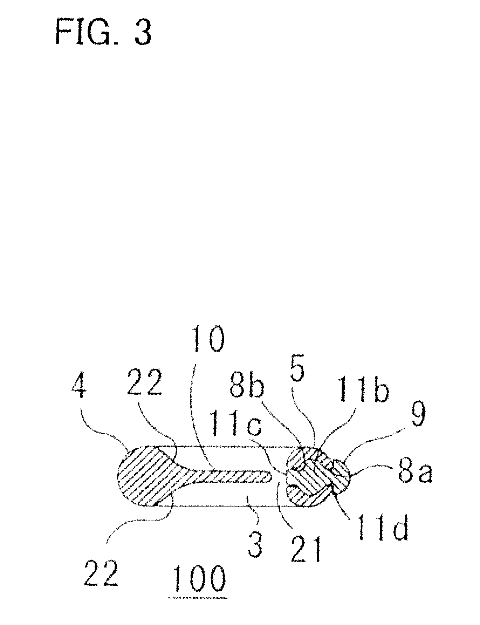

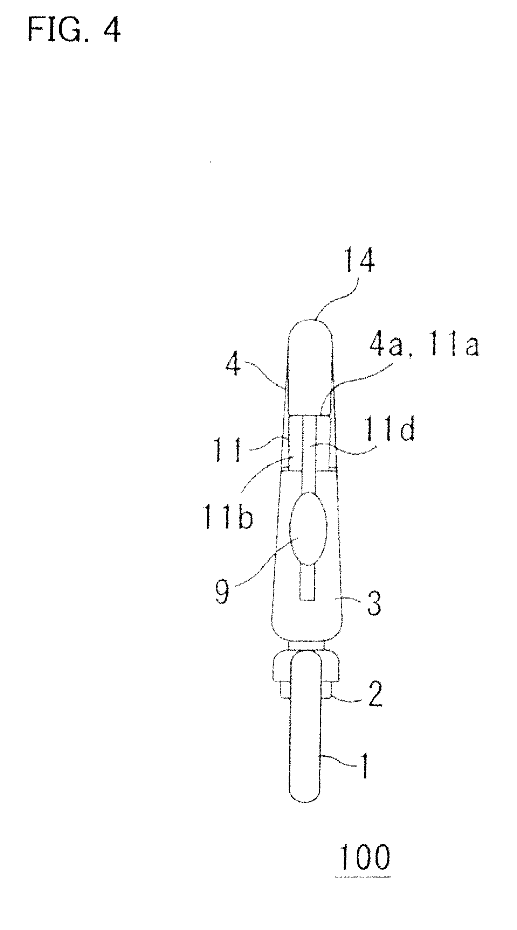

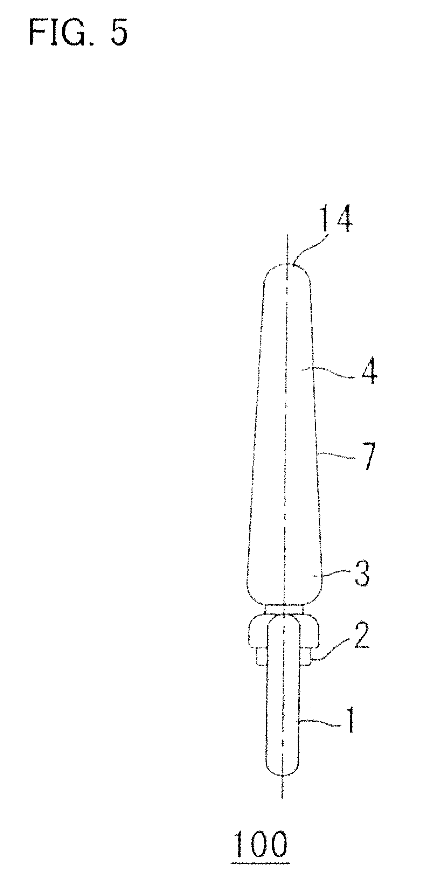

A snap hook for an animal leash according to a first embodiment of the present invention will now be described with reference to FIG. 1, FIG. 2, FIG. 3, FIG. 4, FIG. 5, and FIG. 6. The snap hook is used to lead or hold small animals such as dogs or cats.

FIGs. 1 to 6 show the structure of a snap hook 100 for an animal leash according to the embodiment of the present invention. The snap hook 100 mainly includes a main body 7, a slide bar 11, and a spring 12.

The main body 7 is formed in an elliptic ring-like shape. The main body 7 includes a base 3, a hook portion 4, a sleeve portion 5, and a restraining plate 10. The hook portion 4 has an end 4a and a connection part 14 adapted to accept an object 13 to which the snap hook 100 is fastened. The sleeve portion 5 has an end 5a, and is provided with slits 8a and 8b respectively formed along the direction of the length of the sleeve portion 5. The hook portion 4 and the sleeve portion 5 respectively extend from the base 3, where the end 4a is opposed to the end 5a so as to form an opening 6 between the ends 4a and 5a. The opening 6 allows for the ingress and egress of the object 13. The base 3 is connected to a ring 1 via a stem 2 where the ring 1 is rotatable on the stem 2.

The slide bar 11 has an end 11a and a knob 9. The slide bar 11 is encased in the sleeve portion 5, where the end 11a is opposed to the end 4a of the hook portion 4, and where the knob 9 is exposed through the slit 8a.

The spring 12 is encased in the main body 7. The spring 12 biases the slide bar 11 toward the end 4a of the hook portion 4 so as to close the opening 6.

In order to prevent unexpected detachment of the object 13, the main body 7 includes the restraining plate 10. The restraining plate 10 extends from the base 3 and between the hook portion 4 and the sleeve portion 5 toward the connection part 14 so as to define a window 15 which communicates with the opening 6. The restraining plate 10 restricts the movement of the object 13 within the window 15 so as to prevent the object 13 from approaching the base 3.

The above-described snap hook 100 is used to lead or hold animals. In use, an animal leash 16 shown as an example by an imaginary line in FIG. 1, is connected to the ring 1 of the snap hook 100. The hook portion 4 of the main body 7 is attached to a collar 17 or a D-ring 18 on the collar 17 shown as an example by an imaginary line in FIG. 1, by pushing back the slide bar 11 toward the base 3 to form the opening 6 and inserting the collar 17 or the D-ring 18 into the hook portion 4. In FIG. 1, the hook portion 4 is attached to the D-ring 18.

Unexpected action of an animal, such as when frightened or attracted by something while the animal is led or held, may cause a twist between the snap hook 100 and the D-ring 18. The major portion of such a twist can usually be cancelled out by the rotation of the ring 1 on the stem 2. However, there is a likelihood that uncanceled twist causes entanglement of the snap hook 100 with the D-ring 18.

This entanglement mainly occur where an axis C of the D-ring 18 inclines with respect to an axis B of the main body 7 at an angle (hereinafter "entanglement angle".) This is because that the inclination of the axis C with respect to the axis B may impede the above-mentioned cancellation of the twist. In such cases, the D-ring 18 twists around the main body 7 with their axes intersecting at the entanglement angle.

Such entanglement of the main body 7 with the D-ring 18 can be exacerbated due to the entanglement angle in a case where a D-ring can freely move with respect to a hook portion, as with the conventional snap hook. Depending on the direction or state of the entanglement, there is a risk that a part of the D-ring (a preceding part), positioned outside the hook portion, precedes and touches a knob of a slide bar, resulting in opening of the slide bar. In such cases, a part of the D-ring (a following part), positioned inside the hook portion, follows the preceding part of the D-ring and moves along the inner curved portion of the hook portion so as to approach a thus formed opening of the hook portion. The following part of the D-ring can thus egress from the opening of the hook portion, resulting in an unexpected detachment of the D-ring from the hook portion.

In order to prevent such an unexpected detachment, the snap hook 100 according to the embodiment includes the restraining plate 10 extending from the base 3 of the main body 7 and between the hook portion 4 and the sleeve portion 5 toward the connection part 14 of the hook portion 4. The restraining plate 10 and the connection part 14 define the window 15 therebetween. When the slide bar 11 telescopes inward into the sleeve portion 5 so as to form the opening 6, the window 15 communicates with the opening 6. This configuration allows for the ingress of the D-ring 18 or the like, thereby attaching the D-ring 18 to the connection part 14. After the slide bar 11 is biased toward the closed position, the restraining plate 10 restricts the movement of the D-ring 18 within the window 15, located adjacent to the connection part 14 as shown in FIG. 1. The above-described configuration prevents the D-ring 18 from touching the knob 9 of the slide bar 11 to telescope the slide bar 11 into the sleeve portion 5. In the snap hook 100, the main body 7 is made to be large enough to have a configuration in which the hook portion 4 and the sleeve portion 5 integrally extend from the base 3. The main body 7 is also made to be capable of being attached to an object 13 such as D-ring 18, and being operated to move the slide bar 11 by touching the knob 9.

In the above-described main body 7, the movement of the object 13 is restricted within an area adjacent to the connection part 14, thereby preventing the object 13 from touching the knob 9 of the slide bar 11 to telescope the slide bar 11 into the sleeve portion 5. An unexpected detachment of the object 13 from the hook portion 4 is thereby prevented.

With reference to FIG. 1, the mechanism to prevent the unexpected detachment of the object 13 will be described in detail. The ring 1 is rotatably connected to the base 3 of the main body 7 via the stem 2, where the stem 2 is located opposite to the center of the connection part 14 and aligned with the axis B of the hook portion 4. Under normal (expected) conditions where an animal is led or action of an animal which is held is restricted, tension is exerted between the D-ring 18 and the ring 1 by pulling the animal leash 16, on the inner curved portions thereof. The tension forcing the ring 1, the hook portion 4, and the D-ring 18 to approximately align with a same axis as if an axis A of the ring 1, the axis B of the hook portion 4, and the axis C of the D-ring 18 form/share one axis, as shown in FIG. 1. Even if a twist occurs between the animal leash 16 and the D-ring 18 under a condition that the axes A, B, and C approximately align with a same axis, the twist can be cancelled out by mutual rotation between the main body 7 and the ring 1 on the stem 2.

However, due to unexpected action of an animal which is led or held, a condition may occur where the axis C of the D-ring 18 inclines toward the opening 6 within a certain range, as illustrated by the lines C1, C2, and C3 in FIG. 1. Then, the D-ring 18 will entangle with the hook portion 4 at various positions where the lines C1, C2, and C3 intersects the axis B of the hook portion 4 with an entanglement angle θ. Note that the entanglement angle θ is defined as an angle defined by the mutually-intersected axis B and the lines C1, C2, and C3.

The larger the entanglement angle θ is, the harder the cancellation of the twist is achieved, because the cancellation is impeded by the rotation of the D-ring 18. The cancellation of the twist is even harder to be achieved in a case where the twist occurs instantly. Due to such insufficient cancellation of the twist, the hook portion 4 and the D-ring 18 are pressed against each other at two points, for example E (indicated by a solid line in FIG. 1) and F (indicated by dot line in FIG. 1) in an entangled pose according to an entangling direction. The points E and F are located on opposite sides of the hook portion 4 so as to sandwich the axis C1. Note that the points E and F are respectively shown on front and back sides of the hook portion 4 in FIG. 1. The points E and F may locate in different positions according to the action of an animal.

In this state, the hook portion 4 moves toward the center of the D-ring 18, and the D-ring 18 moves toward the center of the hook portion 4, increasing the entanglement as the D-ring 18 and the hook portion 4 approach each other.

That is, the axis C of the D-ring 18 turns around the hook line of the connection part 14 and the axis line of the slide bar 11, moving in direction H at an angle β. As the angle β approaches 90°, where the point E (on the front side) locates near the outer circumferential portion of the hook portion 4 and the point F locates far therefrom, the D-ring 18 is likely to be essentially led toward the knob 9. Specifically speaking, as the angle β approaches 90°, the hook portion 4 and the D-ring 18 are pressed against each other at the points E and F. The entanglement caused by the twist forces the D-ring 18 to move toward the knob 9 along either or both of the curved portions of connection part 14 and the slide bar 11. During such movement, the D-ring 18 approaches the knob 9 along the curved line of connection part 14. This is similar to the conventional snap hook.

According to the snap hook 100 of the embodiment, the movement of the D-ring 18 is restricted within the window 15, and is interrupted by the restraining plate 10. The D-ring 18 is thus prevented from approaching the hook portion 4 and the slide bar 11 even if the D-ring 18 entangles the hook portion 4 and the slide bar 11. Further description will be given for cases where there exists no angle β. In a case where the D-ring 18 lies at a position where the axis thereof coincides with line C1, the D-ring 18 may be moved along both of the curved portions of the hook portion 4 and the D-ring 18, and may be led toward the hook portion 4 along the axis C1, depending on the condition of twist of the D-ring 18 around the axis C1. However, the movement of the D-ring 18 will soon be blocked by the restraining plate 10, whereby the progress of the entanglement is prevented. The D-ring 18 is thus prevented from touching and pushing back the knob 9, even if the D-ring 18 is led toward the knob 9. The same applies in a case where the axis of the D-ring 18 coincides with line C2. In a case where the axis of the D-ring 18 coincides with line C3, the D-ring 18 tends to be moved along the curved portion of the D-ring 18 which has a relatively small curvature, and led toward the hook portion 4 and the slide bar 11, depending on the condition of twist of the D-ring 18 around the axis C3. However, the movement of the D-ring 18 will soon be blocked by the restraining plate 10, whereby the progress of the entanglement and the movement of the D-ring 18 toward the knob 9 are prevented. The D-ring 18 is thus prevented from touching and pushing back the knob 9.

Next, description will be given for cases where there exists an angle β between the D-ring 18 and the hook portion 4. In these cases, the entanglement between the D-ring 18 and the hook portion 4 causes a force for moving the D-ring 18 toward the knob 9 along either or both of the curved portions of the D-ring 18 and the hook portion 4.

In a case where the D-ring 18 lies at a position where the axis thereof coincides with line C1 or C2, as the angle β approaches 90°, a force for moving the D-ring 18 toward the knob 9 increases. As a result, the D-ring 18 may reach a position where the axis thereof coincides with line C3, as indicated by broken line in FIG. 1. Reference numeral 18a denotes a preceding part of the D-ring 18, and reference numeral 18b denotes a following part of the D-ring 18. Entanglement force R, exerted on the D-ring 18, can be divided into components as indicated by broken arrows in FIG. 1. Reference numeral R1 denotes a component of the force R exerted on the preceding part 18a for moving the D-ring 18 toward the knob 9. Due to twist in direction G indicated by broken line, the component R1 is small, and a component of the force R exerted on the following part 18b for moving the D-ring 18 toward the knob 9 is almost zero. The D-ring 18 is thus prevented from moving toward the knob 9 and from pushing back the knob 9. In other words, the window 15 restricts the movement of the D-ring 18 within a range corresponding to the connection part 14. Note that, in a case where entanglement force does not exert on the D-ring 18, the D-ring 18 freely moves with respect to the hook portion 4. The D-ring 18 is thus free from pushing back the knob 9, even if the D-ring 18 moves toward and touches the knob 9.

In the above-described snap hook 100, the end 4a of the hook portion 4 makes contact with the end 11a of the slide bar 11 such that an interface therebetween inclines with respect to a direction perpendicular to a mutual axis line of the ends 4a and 11a, from the outer circumference to the inner circumference of the main body 7, toward the connection part 14 of the hook portion 4, as shown in FIG. 1. The end 11a of the slide bar 11 is received by the end 4a of the hook portion 4 even when an outward force is exerted on the end 11a by the object 13 such as D-ring 18. Further, the opening 6 formed between the ends 4a and 11a leads the object 13 along the connection part 14 toward the window 15. According to this configuration, sufficient restriction of the movement of the object 13 is achieved while avoiding enlarging the window 15 on the side of the base 3.

The restraining plate 10 is separated from the sleeve portion 5 by a slit 21, in order to facilitate fabrication of the main body 7. The slit 21 is formed along the sleeve portion 5 and between the end 5a and a base 5b of the sleeve portion 5. Fabrication of the main body 7 is conducted as follows. The hook portion 4 and the sleeve portion 5 are formed such that the ends 4a and 5a are staggered. After the slide bar 11 is encased in the sleeve portion 5 together with the spring 12, the sleeve portion 5 is bended so that the ends 4a and 5a are opposed to each other. Provision of the slit 21 facilitates bending of the sleeve portion 5 by separating the sleeve portion 5 and the restraining plate 10. However, the slit 21 can be eliminated if such a staggered arrangement of the ends 4a and 5a is achieved by twisting the tip of the hook portion 4. The slit 21 can also be eliminated if the main body 7 is fabricated by coupling halves so that the slide bar 11 and the spring 12 are sandwiched therebetween.

As mentioned above and shown in FIG. 1, the main body 7 and the slide bar 11 is formed in an elliptic ring-like shape, when viewed from the front. The main body 7 has a width in a direction perpendicular to the axis B. Reference numeral S denotes a portion of the main body 7 having the largest width. In a state where the opening 6 is closed, the knob 9 of the slide bar 11 is located on the base 3 side, namely, between the portion S and the base 3. Even if the object 13 touches and pushes back the knob 9, the knob 9 is moved toward the base 3 having a width smaller than that of the portion S. Thus, the knob 9 is easy to move away from the object 13 which pushes back the knob 9. Further, in an example shown in FIG. 1, since the base 3 and the connection part 14 are located at positions respectively corresponding to focuses of the elliptic shape of the main body 7, the base 3 and the connection part 14 respectively have a width distinctly smaller than that of the portion S. According to this configuration, the knob 9 is easier to move away from the object 13 which pushes back the knob 9, and the connection part 14 is downsized. Under a condition where tension is exerted between the object 13 and the ring 1 by pulling the animal leash 16, the axes of the ring 1, the hook portion 4, and the D-ring 18 approximately align with better accuracy. Consequently, the likelihood of the above-described entanglement caused by the twist is reduced.

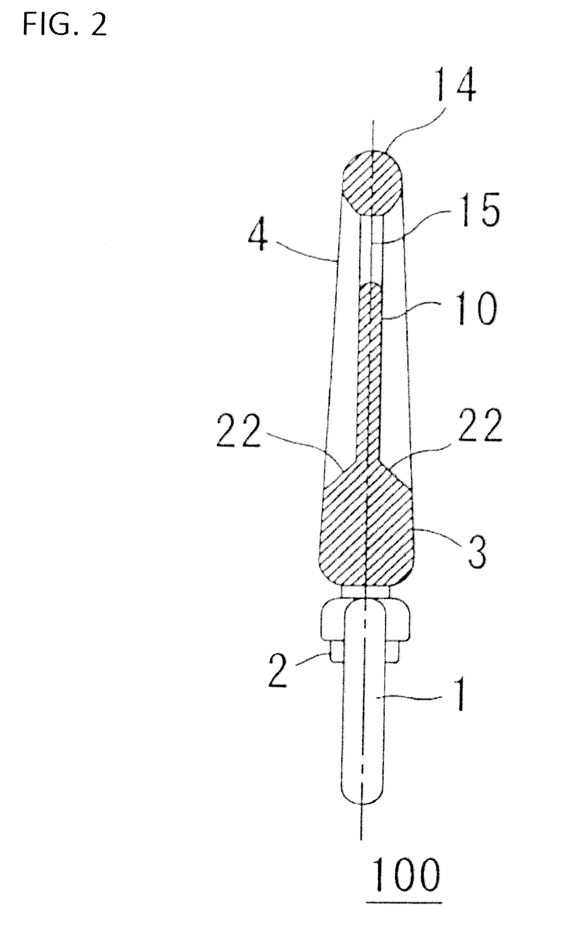

The configurations of the restraining plate 10, the main body 7, and the slide bar 11 will further be described. As shown in FIG. 1, FIG. 2, and FIG. 3, the restraining plate 10 has a thickness smaller than that of the base 3 and the hook portion 4. Specifically, the thickness of the restraining plate 10 is about one-third of that of the connection part 14. The restraining plate 10 extends from the middle of the base 3 and the middle of the hook portion 4, forming slopes 22 on both sides of the restraining plate 10. As shown in FIG. 2, FIG. 4, and FIG. 5, main body 7 reduces its thickness from the base 3 toward the connection part 14. The above-described configuration of the main body 7 and the restraining plate 10 achieves strength sufficient for bearing the entanglement force, while suppressing an increase in size and weight of the main body 7.

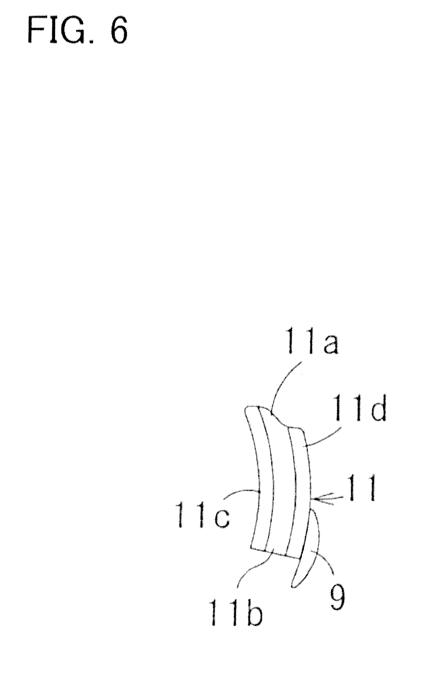

Further, as shown in FIG. 6, the slide bar 11 includes a body 11b and the knob 9. The body 11b has ribs 11c and 11d respectively formed along the direction of the length of the body 11b. The slide bar 11 is encased in the sleeve portion 5 where the ribs 11c and 11d fit in the slits 8a and 8b of the sleeve portion 5. The ribs 11c and 11d are provided to increase the bending strength of the slide bar 11. The snap hook 100 has adequate strength for bearing an outward force exerted on the slide bar 11 by the object 13, due to the bending strength of the slide bar 11, and the above-described interlock between the slide bar 11 and the hook portion 4.

As shown in FIG. 1 and FIG. 6, the knob 9 is integrally formed on a lower portion of the rib 11d so as to overhang the lower end of the slide bar 11. The knob 9 is thereby located on the base 3 side, namely, between the portion S and the base 3. The knob 9 includes an upper surface exposed through the slit 8a, and a lower surface opposed to the upper surface. As shown in FIG. 1, FIG. 3, FIG. 4, and FIG. 6, the lower surface of the knob 9 is formed so as to curve along the elliptic shape of the main body 7. The upper surface of the knob 9 is shaped like a flat dome, in order to serve as a handhold while reducing the likelihood of being hitched by the object 13. In order to prevent slip, the upper surface of the knob 9 can be provided with a plurality of protrusions or recesses. Preferably, the protrusions are small in height, and arranged at an interval smaller than the dimensions of the object 13. The recesses preferably have a width smaller than the dimensions of the object 13.

In order to further restrict the movement of the object 13, the restraining plate 10 can further extend toward the connection part 14 as indicated by an imaginary line in FIG. 1, unless the restraining plate 10 does not block the ingress of the object 13.

According to the snap hook 100 of the present embodiment, when the D-ring 18 touches the knob 9, the knob 9 is moved toward the base 3 of the main body 7, not in parallel to the major axis of main body 7 so as to approach the axis. This non-parallel movement causes the knob 9 to release the D-ring 18 in a position away from where the snap hook 100 will be unexpectedly detached from the D-ring 18.

### (Second Embodiment)

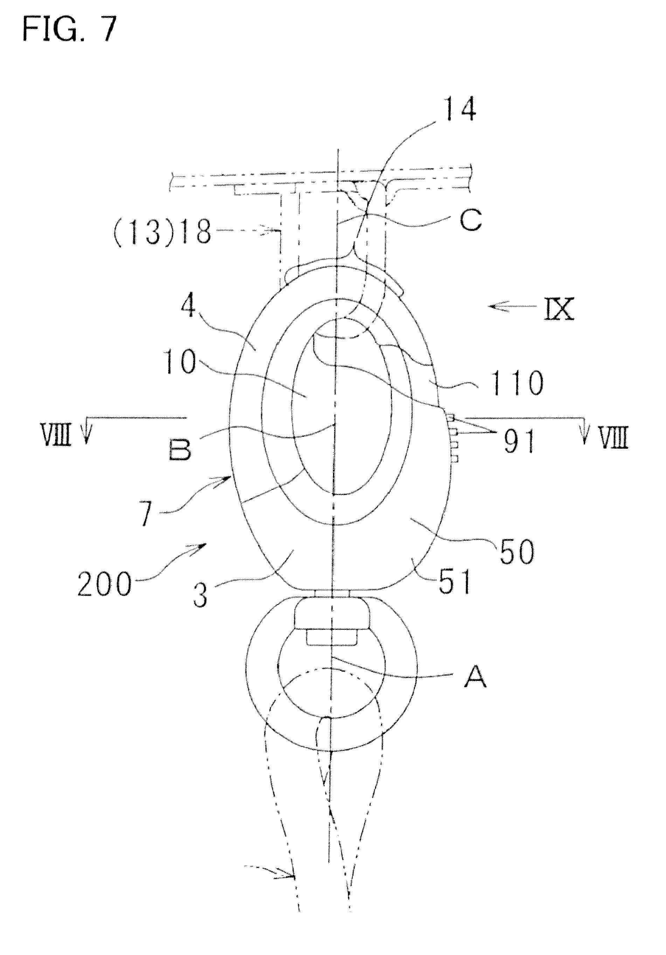

Next, a snap hook for an animal leash according to a second embodiment of the present invention will be described with reference to FIG. 7, FIG. 8, FIG. 9, FIG. 10, FIG. 11, and FIG. 12. As shown in FIG. 7, a snap hook 200 for an animal leash (hereinafter referred to as "snap hook") according to the embodiment differs from the above-described snap hook 100 (see FIG. 1) according to the first embodiment in that the slide bar 11 is replaced with a slide bar 110 and that the sleeve portion 5 is replaced with a sleeve portion 50.

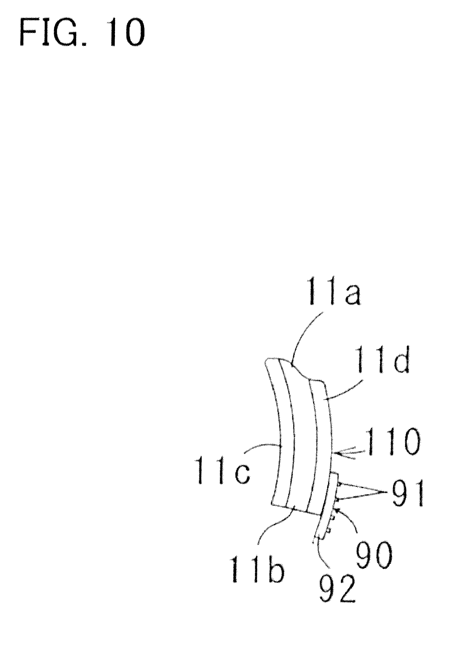

The slide bar 110 includes a knob 90 which will be described with reference to FIG. 10. The knob 90 has a predetermined number of ridges 91 formed on an outer surface, extruding for the user's operation. When viewed from the front, the ridges 91 extrude from the sleeve portion 50. Description of the second embodiment will be focused on the features particular to the present embodiment.

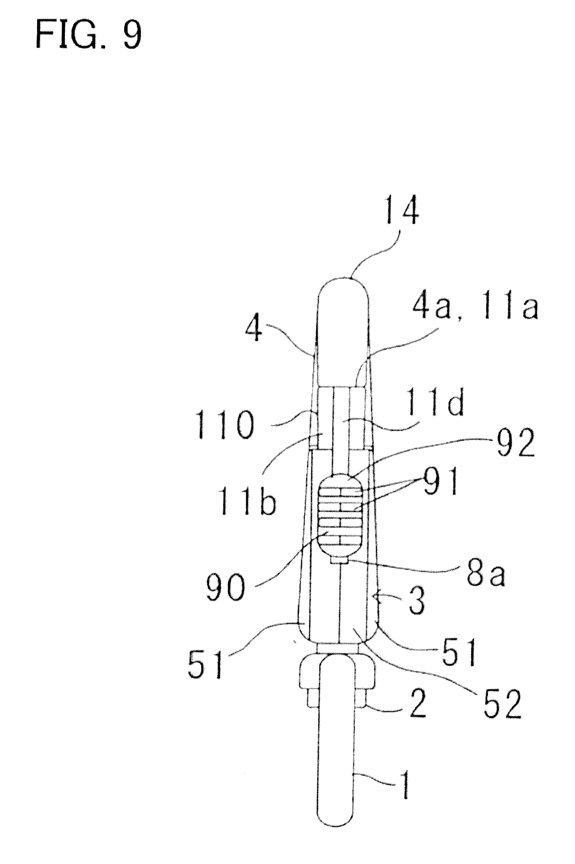

With reference to FIG. 10, the configuration of the slide bar 110 is described. The slide bar 110 differs from the slide bar 11 (see FIG. 6) in that the knob 9 is replaced with the knob 90. The knob 90 includes a body 92 (see FIG. 9) shaped like an oval when viewed from the above. The body 92 is provided with a predetermined number (in FIG. 10, four) of ridges 91 which serve as a handhold for users operating the knob 90.

The ridges 91 lie in a direction substantially perpendicular to a direction in which the knob 90 is moved by the user's operation. The ridges 91 are arranged at an interval smaller than the gauges of the object 13 (in the embodiment, D-ring 18 (see FIG. 7)).

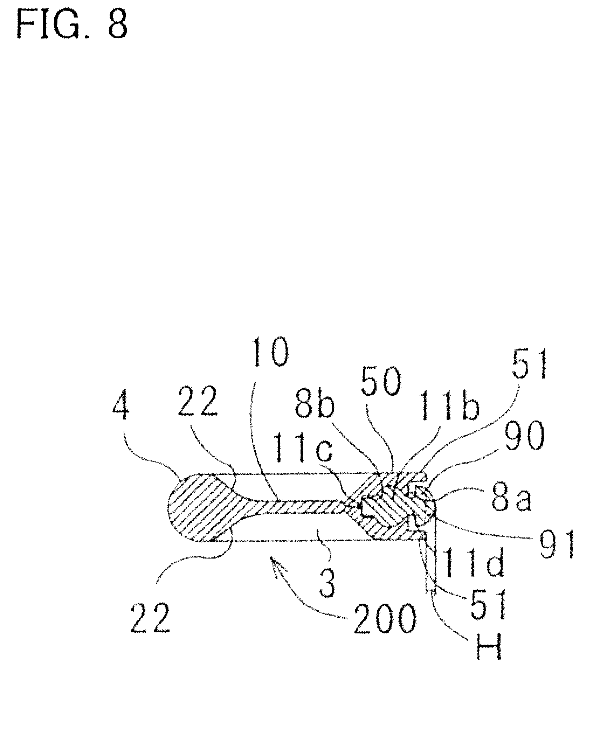

Next, with reference to FIG. 7, FIG. 8, and FIG. 9, the configuration of the sleeve portion 50 is described. As mentioned above, the sleeve portion 50 encases the slide bar 110 such that only the ridges 91 extrude from the sleeve portion 50. Reference symbol "H" (see FIG. 8) denotes the height of the extruding portion of the ridges 91 measured from the sleeve portion 50.

In other words, the sleeve portion 50 hides the body 92 of the knob 90 when viewed from the front. For the sake of this, the sleeve portion 50 has a greater length in the widthwise direction of the snap hook 200 (or, the direction along the minor axis of the elliptic main body 7), compared to that of the sleeve portion 5 (see FIG. 1).

Specifically, as shown in FIG. 8 and FIG. 9, the sleeve portion 50 includes a pair of side walls 51 and 51. The side walls 51 are opposed to each other, and have a height sufficient to hide the body 92 of the knob 90. As shown in FIG. 9, a gap between the side walls 51 is covered by a cover wall 52 except the slit 8a.

In the snap hook 200 having the above-described configuration, the side walls 51 hide the body 92 of the knob 90, and the ridges 91 extrude from the side walls 51 in order to serve as a handhold for users operating the knob 90. That is, the knob 90 is hidden by the sleeve portion 50 (the side walls 51), except the above-mentioned handhold.

Further, in the snap hook 200, the movement of the D-ring 18 is restricted by the restraining plate 10, as with the first embodiment described above.

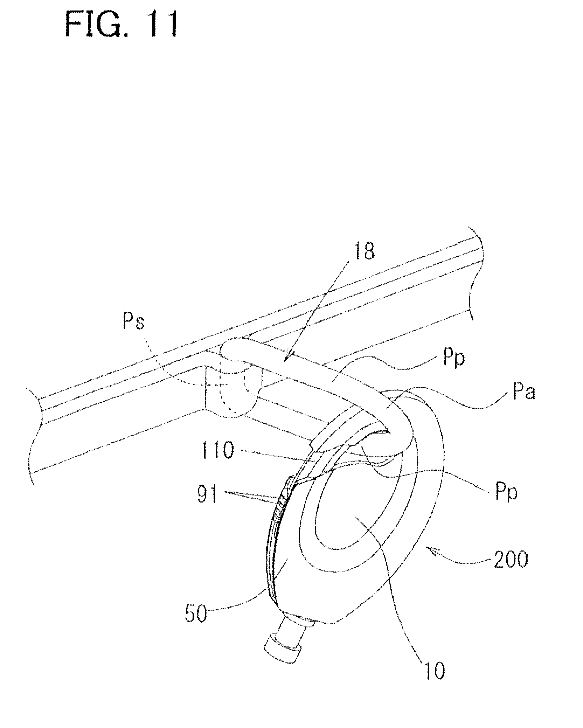

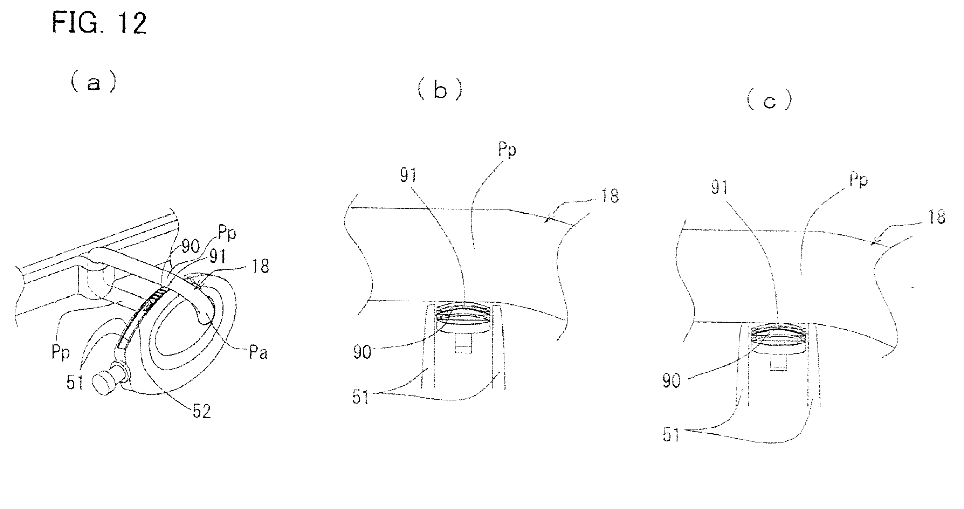

In contrast to the snap hook 100 according to the first embodiment, the snap hook 200 has a feature that the knob 90 is free from being hitched by the D-ring 18, thanks to the side walls 51. This feature will be described in detail with reference to FIG. 11 and FIG. 12.

FIG. 11 shows an example of arrangement of the D-ring 18 and the knob 90, in a condition where the snap hook 200 is joined to the D-ring 18. As illustrated in the figure, the D-ring 18 is formed in the shape of the letter "D", and includes a base portion Ps, an arc portion Pa, and a pair of straight portions Pp. The base portion Ps is shaped like a straight bar, and opposed to the arc portion Pa. The straight portions Pp are parallel to each other, and integrally connect the base portion Ps and the arc portion Pa, respectively. The base portion Ps is stitched in and fastened to a collar or a cloth of an animal.

As described in the first embodiment, the movement of the D-ring 18 is restricted by the restraining plate 10. In other words, the restraining plate 10 restricts the position of one of the straight portions Pp such that the one of the straight portions Pp does not touch the ridges 91. This is achieved by restricting the position of the other of the straight portions Pp with respect to the connection part 14 of the hook portion 4.

Specifically, the dimensions of the restraining plate 10 are determined such that the maximum value of the distance between the contour of the window 15 and the ridges 91 is smaller than the distance between the straight portions Pp. The ridges 91 are thereby prevented from being touched by the straight portions Pp. However, the arc portion Pa of the D-ring 18 may approach the knob 90.

As described in the above, the restraining plate 10 is provided for controlling the movement (swiveling) of the D-ring, especially the straight portion Pp, by confining the axis for the swiveling inside the predetermined area (window 15) of snap hook 200 with respect to the size of D-ring 18. It can be understood that the restraining plate 10 determines the size of D-ring 18 which can be used for the snap hook 200. Thus, the present invention can be applied for D-rings and/or collars with D-rings currently available in the markets. In the present invention, it is easy to design the snap hook corresponding to the currently available D-ring.

As described above, the ridges 91 are prevented from being touched by the straight portions Pp of the D-ring 18. However, the arc portion Pa of the D-ring 18 may approach the knob 90.

To be more precise, although the inner circumferential portion of the arc portion Pa may approach the knob 90, the D-ring 18 is prevented from touching the ridges 91. Even if the inner circumferential portion of the arc portion Pa lies astride the side walls 51, the portion is prevented from touching the ridges 91, due to the small curvature of the D-ring 18 mentioned in the first embodiment.

Depending on arrangement of the D-ring 18 and the snap hook 200, the inner circumferential portion of the arc portion Pa may move away from the ridges 91.

As described above, in a case where the D-ring 18 entangles the hook portion 4, the D-ring 18 is prevented from touching the knob 90 (the ridges 91), due mainly to the restraining plate 10 and the side walls 51. Thus, the knob 90 (the ridges 91) is free from being pushed back by the D-ring 18.

Also in a case where the D-ring 18 does not entangle the hook portion 4, the knob 90 (the ridges 91) is free from being pushed back by the D-ring 18, as described in the first embodiment.

Description was given with respect to a case where the axis A of the ring 1, the axis B of the hook portion 4, and the axis C of the D-ring 18 form/share one axis due to tension exerted by pulling the animal leash 16. Under such a condition, a twist which occurs between the animal leash 16 and the D-ring 18 can be cancelled out by mutual rotation between the main body 7 and the ring 1 on the stem 2.

Thus, entanglement force does not exert on the D-ring 18 and the hook portion 4. The D-ring 18 is thus free from pushing back the knob 90, even if the D-ring 18 moves toward or turns over, and touches the knob 90.

According to the snap hook 200, the D-ring 18 is prevented from touching the knob 90 (the ridges 91), regardless of the presence or absence of an entanglement caused by unexpected action of an animal. Unexpected detachment of the D-ring from the snap hook 200 is thereby prevented.

However, years of service or tough service may cause the deterioration of material or wear of the snap hook 200, resulting in a change in the dimensions of the snap hook 200. In other words, dimensions or arrangement of the parts Constituting the snap hook 200 will change.

FIG. 12 shows an example of arrangement of the D-ring 18 and the snap hook 200 under such a Condition. As illustrated in the figure, the straight portion Pp (see FIG. 12(a)), which is not joined to the snap hook 200, is normally prevented from touching the ridges 91. In these cases, the straight portion Pp may touch the ridges 91 inadvertently (see FIG. 12(b)).

In such a case, the straight portion Pp firstly touches the ridges 91, and presses the knob 90 inwardly. The ridges 91 possibly catch and seize the straight portion Pp at the extruding portions thereof, and possibly serve as a handhold for an inadvertent knob downing operation by the straight portion Pp.

It is noted that the slide bar 110 provided with the knob 90 is encased in an inner space of the sleeve portion 50 with a predetermined clearance C therebetween. In other words, a gap corresponding to the clearance C exists between the distal end of the slide bar 110 from the ridges 91 and the inner wall of the sleeve portion 50.

Therefore, when the clearance (gap) C is greater than the extruding height H, the pressing motion of the straight portion Pp is absorbed by the clearance C (see FIG. 12(c)), so that the ridges 91 loose the seizure of the straight portion Pp. Thus, it is prevented that the ridges 91 serve as the handhold.

On the contrary, when the clearance (gap) C is smaller than the extruding height H, the pressing motion of the straight portion Pp can be partially absorbed according to the the clearance C. As a result, the ridges 91 can serve as the handhold having a seizing power according to the difference between the height H and the clearance C.

Therefore, when the difference is sufficient for the ridges 91 to serve as the handhold, the straight portion Pp can push back the knob 90 by a certain distance (hereinafter referred to as "move away distance") until the ridges 91 move away in a manner similar to that of the first embodiment.

After being pushed back by the move away distance, the ridges 91 are released from the straight portion Pp, and the slide bar 110 returns to its original position, as with the knob 9 in the first embodiment.

It is noted that the height H and the width (length in the direction along the major axis of the main body 7) of the extruding portion of the ridges 91 are about one-to-several-tenths of that of the knob 9. Since the ridge 91 is much smaller than the knob 9 of the first embodiment, the distance required for moving away from the straight portion Pp (D-ring 18 in the first embodiment) is trivial, compared with the first embodiment. As a matter of course, the move away distance is proportional to the distance by which the knob 90 is pushed back.

If the straight portion Pp intermittently touches each of the ridges 91, the knob 90 moves toward its original position every time the straight portion Pp climbs over the ridge 91 in contact.

Apparently, the unexpected detachment of the D-ring 18 from the snap hook 200 can be prevented more securely.

When the difference is too small to serve as a handhold, it is needless to say that the prevention of the unexpected releasing of the D-ring 18 from the snap hook 200 is further improved.

In the present embodiment, described is a part of the ridges 91 of the knob 90 is exposed, that is, the exposed portion thereof is extruding from the sleeve portion 50.

However, the snap hook can be embodied such that the ridges 91 are not extruding from the sleeve portion 50. This configuration eliminates the possibility that the D-ring 18 touches the ridges 91 and unexpected detachment of the snap hook from the D-ring 18. This type of snap hook is however less easy-to-operate, in comparison to the snap hook in which a part of the ridges 91 extrudes from the sleeve portion 50. The snap hook can surely be operated if users move the knob 90 by the finger cushion or nail.

The snap hook according to the present invention prevents unexpected detachment of the object from the snap hook caused by unexpected pushing back of the slide bar due to entanglement between the object and the snap hook caused by twist between the object and the snap hook.

While preferred embodiments of the invention have been described using specific terms, such description is for illustrative purposes only, and it is to be understood that changes and variations may be made without departing from the spirit or scope of the following claims.

## Claims

1. A snap hook (200) for an animal leash, comprising:
a main body (7) including
a base (3),
a hook portion (4) extending from the base (3), the hook portion (4) having an end (4a) and a connection part (14) for contacting an object (13) to which the snap hook (200) is joined,
a sleeve portion (50) having an end (5a) and being provided with a slit (8a) formed along a direction of the length of the sleeve portion (50), the sleeve portion (50) extending from the base (3) such that the end (5a) being opposed to the end (4a) of the hook portion (4), thereby defining an opening (6) therebetween for accepting the object (13), and
a restraining plate (10) extending from the base (3) and between the hook portion (4) and the sleeve portion (50) toward the connection part (14), thereby defining a window (15) which communicates with the opening (6);
a ring (1) rotatably connected to the base (3);
a slide bar (110), provided with a knob (90), being encased in the sleeve portion (50) such that an end (11a) of the slide bar (110) is opposed to the end (4a) of the hook portion (4) and that a ridge (91), formed on an outer surface of the knob (90), extrudes through the slit (8a); and
a spring (12) for biasing the slide bar (110) toward the end (4a) of the hook portion (4), thereby closing the opening (6),
wherein the restraining plate (10) restricts the movement of the object (13) within the window (15), thereby preventing the object (13) from approaching the base (3).

2. The snap hook (200) for an animal leash according to claim 1, wherein the end (4a) of the hook portion (4) makes contact with the end (11a) of the slide bar (110) such that an interface therebetween inclines with respect to a direction perpendicular to a mutual axis line of the ends (4a, 11a), from the outer circumference to the inner circumference of the main body (7), toward the connection part (14) of the hook portion (4).

3. The snap hook (200) for an animal leash according to claim 1, wherein the sleeve portion (50) includes a pair of side walls (51) for hiding the knob (90) while allowing extrusion of the ridge (91).

4. The snap hook (200) for an animal leash according to claim 1, wherein
the base (3), the hook portion (4), the sleeve portion (50), and the slide bar (110) form an elliptic ring-like shape having a widest portion (S) widest in a direction perpendicular to a direction in which the base (3) and the ring (1) are connected, and
the knob (90) is located between the widest portion (S) and the base (3).
